(19) Europäisches Patentamt / European Patent Office / Office européen des brevets

(11) **EP 4 517 910 B1**

(12) **EUROPEAN PATENT SPECIFICATION**

(45) Date of publication and mention
of the grant of the patent:
**06.05.2026 Bulletin 2026/19**

(21) Application number: **23881053.5**

(22) Date of filing: **07.03.2023**

(51) International Patent Classification (IPC):
**H01M 10/0585** (2010.01)    **H01M 10/42** (2006.01)

(52) Cooperative Patent Classification (CPC):
**H01M 10/4235; H01M 4/139; H01M 4/621;**
**H01M 4/624; H01M 10/0525; H01M 10/0585;**
H01M 4/623; H01M 2004/021; Y02E 60/10

(86) International application number:
**PCT/CN2023/079998**

(87) International publication number:
**WO 2024/087450 (02.05.2024 Gazette 2024/18)**

(54) **STACKED BATTERY CELL AND LITHIUM ION BATTERY**

STAPELBATTERIEZELLE UND LITHIUM-IONEN-BATTERIE

ÉLÉMENT DE BATTERIE EMPILÉ ET BATTERIE AU LITHIUM-ION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **24.10.2022 CN 202211304492**

(43) Date of publication of application:
**05.03.2025 Bulletin 2025/10**

(73) Proprietor: **Zhuhai CosMX Battery Co., Ltd.**
**Zhuhai, Guangdong 519180 (CN)**

(72) Inventors:
• **ZHANG, Jian**
**Zhuhai, Guangdong 519180 (CN)**
• **PENG, Chong**
**Zhuhai, Guangdong 519180 (CN)**

(74) Representative: **Vossius & Partner**
**Patentanwälte Rechtsanwälte mbB**
**Siebertstrasse 3**
**81675 München (DE)**

(56) References cited:
WO-A1-2016/111185    CN-A- 1 485 939
CN-A- 114 068 870    CN-A- 114 156 429
CN-A- 114 156 429    US-A1- 2005 100 782

## Description

### TECHNICAL FIELD

The present application belongs to the field of lithium-ion battery, and specifically relates to a laminated battery cell and a lithium-ion battery.

### BACKGROUND

Lithium-ion batteries must undergo mechanical abuse testing before they can be applied to actual scenarios. Mechanical abuse testing refers to testing the performance of batteries under simulated extreme conditions, such as extrusion testing, puncture testing, etc. Lithium-ion battery has a high probability of failure during mechanical abuse testing, and the reason is that when the battery is subjected to mechanical damage, a serious short circuit will occur internally. For example, a short circuit occurs when a current collector contacts with a current collector of the adjacent electrode sheet, when an active layer contacts with an active layer of the adjacent electrode sheet, or when a current collector contacts with an active layer of the adjacent electrode sheet, causing thermal runaway. Therefore, how to improve the safety performance of lithium-ion batteries is a technical problem that needs to be solved urgently in this field.

US 2005/100782 Al discloses a lithium secondary battery exhibiting the improved function of self safety in an abnormal state without sacrificing battery characteristics. To attain the object, in a lithium secondary battery comprising a positive electrode, a negative electrode, an electrolytic solution, and a separator, a plurality of positive electrodes and negative electrodes are arranged to construct an electrode structure which includes an outermost layer of electrode on which a back coat layer is formed.

CN 114156429 A discloses an electrode sheet and a lithium-ion battery. In a first aspect, the disclosure provides an electrode sheet, which includes a substrate. The substrate comprises a current collector and a protective layer disposed on the surface of the current collector, and an active material layer is further provided on the protective layer; according to mass percentage, the protective layer consists of 62%-97% inactive material, 0.1%-8% conductive agent, and 3%-30% binder, with a resistivity of 500-5000 $\Omega\cdot$cm.

### SUMMARY

The present invention is set out in the appended set of claims. The present application provides a laminated battery cell, which can prevent the internal short circuit of the lithium-ion battery during mechanical abuse by arrangement of a first protective layer and a second protective layer, so that the lithium-ion battery has excellent safety performance.

The present application also provides a lithium-ion battery, which has good safety performance because it includes the above-mentioned laminated battery cell.

In one aspect of the present application, a laminated battery cell is provided, including an electrode sheet assembly and a protection assembly, where the protection assembly is located on a surface of an outer electrode sheet of the electrode sheet assembly; the electrode sheet assembly includes at least one functional electrode sheet, the functional electrode sheet includes a first current collector, a first protective layer and a first active layer, and the first protective layer is located between the first current collector and the first active layer; the protection assembly includes a second current collector and a second protective layer, and the second protective layer is away from the electrode sheet assembly; the first protective layer and the second protective layer each independently includes a conductive particle and a binder; the conductive particle is an inorganic filler with a conductive coating layer on its surface, the conductive coating layer accounts for 2% to 40% of a mass content of the conductive particle, and a thickness of the first protective layer and a thickness of the second protective layer are each greater than $0.5\mu$m.

According to one embodiment of the present application, at least a portion of the conductive coating layer constitutes an outermost layer of the conductive particle.

According to one embodiment of the present application, the conductive coating layer covers at least a portion of the inorganic filler.

According to one embodiment of the present application, a thickness of the first protective layer is A, a thickness of the second protective layer is B, and A is less than or equal to B.

According to one embodiment of the present application, the thickness of the first protective layer and the thickness of the second protective layer are each independently $1\mu$m to $10\mu$m.

According to one embodiment of the present application, the first protective layer and the second protective layer each independently includes 40% to 98% of the conductive particle, 2% to 30% of the binder, and 0% to 40% of the non-conductive particle by mass content.

According to an embodiment of the present application, the first protective layer and the second protective layer each independently have a resistance of 10-2000m$\Omega$; and/or the resistivity of the conductive particle is 1-100$\Omega\bullet$cm; and/or

the average particle size of the conductive particle is 0.05 to 5μm.

According to one embodiment of the present application, the conductive coating layer includes at least one of tin oxide, indium oxide, ATO, FTO, ITO, AZO, and carbon material. Among them, ATO refers to antimony-doped tin oxide, FTO refers to fluorine-doped tin oxide, ITO refers to tin-doped indium oxide, and AZO refers to aluminum-doped zinc oxide. According to one embodiment of the present application, the inorganic filler includes at least one of aluminum oxide, magnesium oxide, titanium oxide, zinc oxide, silicon oxide, boehmite, cobalt oxide, iron phosphate, lithium iron phosphate, lithium nickel cobalt manganese oxide, and lithium iron manganese phosphate.

A second aspect of the present application provides a lithium-ion battery, which includes the above-mentioned laminated battery cell.

The implementation of the present application has at least the following beneficial effects.

In the laminated battery cell provided in the present application, the first protective layer and the second protective layer play a role of physical isolation, so that the current collector of the electrode sheet is not easily exposed, thereby avoiding contact between the current collector inside the battery cell and the first active layer or current collector of its adjacent electrode sheet, further reducing the probability of short circuit and significantly improving the safety performance of the battery. At the same time, the conductive particle can ensure the conductivity of the protective layer, so that the battery can have excellent safety performance while also having good cycle performance.

The lithium-ion battery provided by this application includes the laminated battery cell and has good safety performance and cycle performance.

## BRIEF DESCRIPTION OF DRAWINGS

FIG. 1 is a schematic structural diagram of a laminated battery cell according to an embodiment of the present application.

FIG. 2 is a schematic diagram of the cross-sectional structure of a laminated battery cell obtained by sectioning along a plane where a sectioning line as shown in FIG. 1 is located.

FIG. 3 is a schematic structural diagram of a functional electrode sheet according to an embodiment of the present application.

FIG. 4 is a schematic structural diagram of a protection assembly according to an embodiment of the present application.

FIG. 5 is a schematic structural diagram of a protection assembly according to another embodiment of the present application.

Illustration of reference signs:

1: electrode sheet assembly; 2: protection assembly; 101: functional electrode sheet; 102: negative electrode sheet; 103: separator; 104: positive tab; 105: negative tab; 1011: first current collector; 1012: first protective layer; 1013: first active layer; 2011: second current collector; 2012: second protective layer; 2013: second active layer.

## DESCRIPTION OF EMBODIMENTS

In order to make the purpose, technical solutions and advantages of the present application clearer, the technical solutions in the embodiments of the present application will be clearly and completely described below in combination with the embodiments and drawings of the present application. Obviously, the described embodiments are only part of the embodiments of the present application, not all of the embodiments. Based on the embodiments in this application, all other embodiments obtained by those skilled in the art without doing any creative work shall fall within the scope of protection of this application.

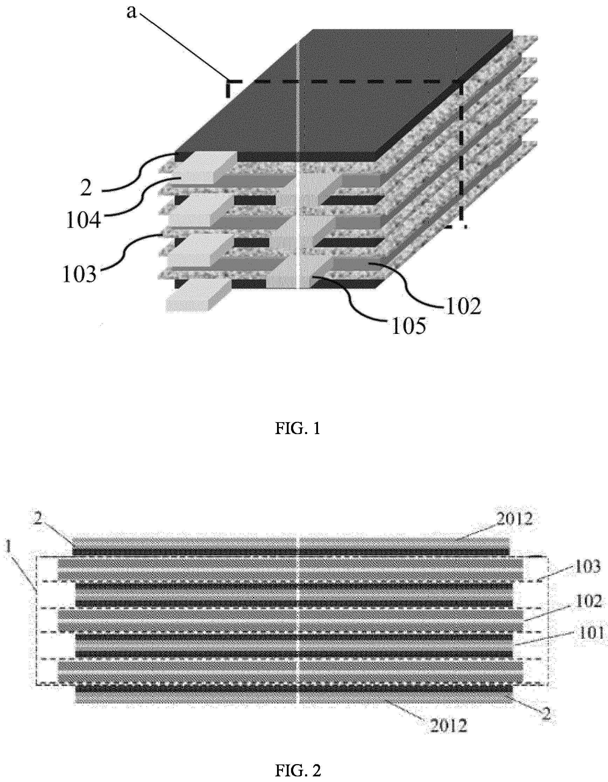

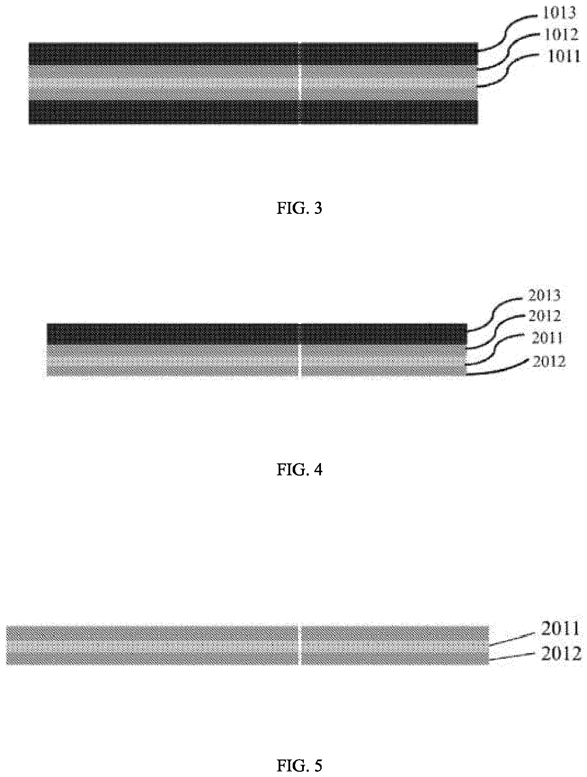

Please refer to FIGs 1 to 5, a laminated battery cell provided in the present application includes an electrode sheet assembly 1 and a protection assembly 2, where the protection assembly 2 is located on the surface of an outer electrode sheet of the electrode sheet assembly 1; the electrode sheet assembly 1 includes at least one functional electrode sheet 101, the functional electrode sheet 101 includes a first current collector 1011, a first protective layer 1012 and a first active layer 1013, and the first protective layer 1012 is located between the first current collector 1011 and the first active layer 1013; the protection assembly 2 includes a second current collector 2011 and a second protective layer 2012, and the second protective layer 2012 is away from the electrode sheet assembly 1; the first protective layer 1012 and the second protective layer 2012 each independently includes a conductive particle and a binder.

In the present application, the laminated battery cell includes the electrode sheet assembly 1 and the protection assembly 2 which are laminated, where the electrode sheet assembly 1 has two opposite outer sides in the laminating direction of the laminated battery cell, and the protection assembly 2 is located on the outer side of the electrode sheet assembly 1.

The number of the protection assembly 2 is one or two. According to the number of the protection assembly 2, the protection assembly 2 is selected to be disposed on one side or both sides of the electrode sheet assembly 1. For example, when the number of the protection assembly 2 is one, the protection assembly 2 is located at any one of outer sides of the electrode sheet assembly 1; when the number of protection assembly 2 is two, two protection assemblies 2 are respectively disposed on two outer sides of the electrode sheet assembly 1. The protection assembly 2 functions to protect the electrode sheet assembly; and the protection assembly 2 is separated from the electrode sheet assembly 1 by a separator 103.

The electrode sheet assembly of the present application includes electrode sheets laminated in sequence, which are separated by the separator 103. The electrode sheets are divided into a functional electrode sheet and a non-functional electrode sheet depending on whether to set the first protective layer 1012. The number of the functional electrode sheet 101 is one or more. Each functional electrode sheet 101 includes a first current collector 1011. The first current collector 1011 has two largest surfaces, and the first protective layer 1012 and the first active layer 1013 are disposed on the largest surfaces. The current collector of the non-functional electrode sheet is provided with only an active layer, and no protective layer.

In the functional electrode sheet 101, the first active layer 1013 is disposed on one side or on both sides, and correspondingly, the first protective layer 1012 is disposed on one side or on both sides, as long as the first protective layer 1012 is located between the first active layer 1013 and the first current collector 1011.

The protection assembly 2 includes a second current collector 2011 having two largest surfaces, and a second protective layer 2012 is disposed on the largest surface. The second protective layer 2012 is located on the surface of the second current collector 2011 away from the electrode sheet assembly 1. In order to further improve the capacity of the battery, a second active layer 2013 may be coated on the surface of the second current collector 2011 close to the electrode sheet assembly 1. In this case, the second protective layer may also be disposed between the second active layer 2013 and the second current collector 2011.

The first protective layer 1012 and the second protective layer 2012 each independently include a conductive particle and a binder and 0% to 40% of non-conductive particle. Preferably, the first protective layer 1012 and the second protective layer 2012 are each composed of the conductive particle and the binder. The conductive particle provides the first protective layer 1012 and the second protective layer 2012 with a good conductive network. The binder can ensure that the first protective layer 1012 and the second protective layer 2012 are fixedly bonded to the first current collector 1011 and the second current collector 2011.

The applicant has found through research that the first protective layer 1012 and the second protective layer 2012 can play a role of physical isolation when the battery suffers from mechanical damage, so that the current collectors in the electrode sheet assembly 1 and the protection assembly 2 are not easily exposed, and the current collectors inside the laminated battery cell will be prevented from contacting with the active layer or current collector of the adjacent electrode sheet, thereby reducing the possibility of short circuit and significantly improving the safety performance of the battery. At the same time, the conductive particle makes the first protective layer 1012 and the second protective layer 2012 conductive, which can ensure smooth electronic conduction between the active layer and the current collector, so that the battery has excellent safety performance and good cycle performance.

In order to further improve the capacity of the battery, the second active layer 2013 may be coated on the surface of the second current collector 2011 close to the electrode sheet assembly 1. At this point, a second protective layer may also be disposed between the second active layer 2013 and the second current collector 2011.

In the present application, there is no limitation on the peeling force between the first protective layer 1012 and the first current collector 1011, and the peeling force between the first protective layer 1012 and the first active layer 1013, which can be adjusted according to actual needs. In a preferred embodiment, the peeling force between the first protective layer 1012 and the first current collector 1011 is greater than the peeling force between the first protective layer 1012 and the first active layer 1013, which can further reduce the possibility of the short circuit of battery due to the first current collector 1011 contacting with the first active layer 1013.

By adjusting the type and amount of the binders in the first protective layer 1012 and the first active layer 1013, the peeling force between the first protective layer 1012 and the first current collector 1011 and the peeling force between the first protective layer 1012 and the first active layer 1013 can be controlled.

Specifically, when the types of binders in the first protective layer 1012 and the first active layer 1013 are the same, by controlling the content of the binder in the first protective layer 1012 to be greater than the content of the binder in the first active layer 1013, the peeling force between the first protective layer 1012 and the first current collector 1011 is greater than the peeling force between the first protective layer 1012 and the first active layer 1013.

When the content of the binders in the first protective layer 1012 and the first active layer 1013 is the same, selecting a binder with relatively stronger adhesion to add to the first protective layer 1012, and adding a binder with relatively weaker adhesion to add to the first active layer 1013, the peeling force between the first protective layer 1012 and the first current collector 1011 is greater than the peeling force between the first protective layer 1012 and the first active layer 1013.

In the present application, there is no limitation on the thickness of the first protective layer 1012 and the second protective layer 2012, which can be adjusted according to actual conditions. In a preferred embodiment, the thickness of the first protective layer 1012 is A, and the thickness of the second protective layer 2012 is B, satisfying A≤B, which is more conducive to improving the safety of the battery.

As the thickness of the first protective layer 1012 and the thickness of the second protective layer 2012 increase, the safety performance of the lithium-ion battery can be improved accordingly, but at the same time it will also lead to a corresponding decrease in the volume energy density of the battery. In order to take into account both the safety performance and volume energy density of the lithium-ion battery, in a preferred embodiment, the thickness of the first protective layer 1012 and the thickness of the second protective layer 2012 are each independently $1\mu m$-$10\mu m$, preferably $2\mu m$-$5\mu m$.

In the present application, the provision of the first protective layer 1012 and the second protective layer 2012 may lead to an increase in battery impedance. In order to avoid the increase in the battery impedance, the applicant has found that when the resistance of each of the first protective layer 1012 and the second protective layer 2012 is $10m\Omega$-$2000m\Omega$, more preferably $100m\Omega$-$1000m\Omega$, the battery can still maintain good cycle performance. Where, the resistance of the first protective layer 1012 and the resistance of the second protective layer 2012 refer to the resistance values through the thickness of the first protective layer 1012 and the second protective layer 2012, respectively.

The resistance of the first protective layer 1012 and the second protective layer 2012 can be controlled by selecting conductive particles with different resistivities and controlling the content of the conductive particle in the first protective layer 1012 and the second protective layer 2012 and so on.

In some embodiments, the resistivity of the conductive particle can be controlled to be 1-100 $\Omega \cdot cm$ by controlling the type and particle size of the conductive particle.

In order to achieve the coating of the first protective layer 1012 and the second protective layer 2012 on the current collector, and to enable the conductive particles to be more densely distributed on the first protective layer 1012 and the second protective layer 2012, thereby making the lithium-ion battery have both good energy density and safety performance, the average particle size Dv50 of the conductive particle is 0.05-$5\mu m$, preferably 0.1-$1\mu m$ in the present application.

The conductive particle contains a conductive material. When the content of the conductive material is low, it is not conducive to the cycle performance of the battery; when the content of the conductive material is high, the conductive particle is prone to agglomeration and is difficult to evenly disperse in the protective layer. The applicant has found through research that when the conductive particle is an inorganic filler with its surface coated with a conductive coating layer, the conductive coating layer provides the protective layer with a good conductive network, and the excellent dispersibility of the inorganic filler itself provides the conductive particle with good dispersibility. This can further improve the physical isolation and conductive properties of the protective layer.

Specifically, the conductive coating layer has conductivity and is made of the conductive material. At least a part of the conductive coating layer constitutes the outermost layer of the conductive particle, as long as the conductive coating layer covers at least a part of the inorganic filler. In order to obtain better conductive property, the higher the coverage, the better it is.

The conductive coating layer includes at least one of tin oxide, indium oxide, ATO, FTO, ITO, AZO, and carbon materials, preferably at least one of ATO, FTO, ITO, and AZO, and more preferably ATO. Among them, ATO refers to antimony-doped tin oxide, in which the antimony doping amount is 0-30%; FTO refers to fluorine-doped tin oxide, in which the fluorine doping amount is 0-10%; ITO refers to tin-doped indium oxide, in which the tin doping amount is 0-30%; AZO refers to aluminum-doped zinc oxide, in which the aluminum doping amount is ≤20%.

The inorganic filler has the characteristics of high mechanical strength, good stability and good heat resistance. In the present application, there is no limitation on the specific type of the inorganic filler. In a preferred embodiment, the inorganic filler includes at least one of aluminum oxide, magnesium oxide, titanium oxide, zinc oxide, silicon oxide, boehmite, cobalt oxide, iron phosphate, lithium iron phosphate, lithium nickel cobalt manganese oxide, and lithium iron manganese phosphate.

Controlling the mass content of the conductive coating layer in the conductive particle can further ensure that the lithium-ion battery has both good conductivity and safety performance. In a preferred embodiment, when the conductive coating layer accounts for 2% to 40% of the mass content of the conductive particle, the battery has relatively balanced safety performance and cycle performance.

In the present application, no particular limitation is imposed on the type of binder, as long as it can ensure effective bonding between the protective layer and the current collector. In a preferred embodiment, the binder includes at least one of polyvinylidene fluoride (PVDF), acrylic modified PVDF, polyacrylate polymer, polyimide, styrene butadiene rubber, and styrene acrylic rubber.

Taking into account the safety performance and cycle performance of lithium-ion battery, in the present application the content of conductive particle and the content of binder in each of the first protective layer and the second protective layer are also made a limitation. Specifically, the first protective layer and the second protective layer independently include 40% to 98% of the conductive particle, 2% to 30% of the binder and 0% to 40% of the non-conductive particle based on a mass content.

In the present application, in addition to the conductive particle and the binder included, the strength of the conductivity of the protective layer may be adjusted by adding other conductive agents or non-conductive agents. For example, a non-conductive agent such as alumina ceramic may be additionally added to reduce the conductivity of the protective layer, and a conductive agent such as carbon nanotubes may be additionally added to increase the conductivity of the protective layer. It should be noted that the above additional additives are not necessary for the protective layer of the present application.

In the present application, the functional electrode sheet in the electrode sheet assembly is the negative electrode sheet and/or the positive electrode sheet; and the electrode sheet of the protection assembly is the negative electrode sheet and/or the positive electrode sheet.

In an embodiment as shown in FIG. 2, all functional electrode sheets 101 in the electrode sheet assembly 1 are positive electrode sheets, the composition of the negative electrode sheet 102 in the electrode sheet assembly can refer to conventional negative electrode sheets in the art, and the protection assemblies 2 are all positive electrode sheets.

In the present application, there are no limitations on the material of the active layer, which may include an active material, a conductive agent, a binder and other components according to conventional compositions in the art. Among them, the component such as the active material, the conductive agent, and the binder may all be selected from conventional materials in the art.

Taking the positive electrode sheet as an example, the positive electrode active material includes one or more of lithium cobaltate, lithium nickel cobalt manganese oxide, lithium nickel cobalt aluminum oxide, lithium iron phosphate, and lithium manganate; the conductive agent includes one or more of conductive carbon black, carbon nanotubes, conductive graphite, and graphene; the binder includes one or more of polyvinylidene fluoride (PVDF), acrylic modified PVDF, polyacrylate polymer, polyimide, styrene-butadiene rubber, and styrene-propylene rubber.

The functional electrode sheet of the present application can be prepared by conventional technical means in the field. Specifically, the raw materials constituting the first protective layer can be uniformly dispersed in a solvent to obtain a protective layer slurry; the raw materials constituting the first active layer can be uniformly dispersed in a solvent to obtain a first active layer slurry; then the protective layer slurry is coated on at least one surface of the first current collector and dried to obtain the first protective layer; and then the first active layer slurry is coated on the first protective layer, and dried to obtain the functional electrode sheet of the present application.

In the present application, there is no specific limitation the coating method, and any coating method such as gravure coating, extrusion coating, spray coating, screen printing, etc. can be used to coat the protective layer slurry and the active layer slurry.

The lithium-ion battery provided in the present application includes the above-mentioned laminated battery cell, and the lithium-ion battery can be prepared by conventional methods in the art. Specifically, the laminated battery cell can be further subjected to processes such as baking, liquid injection, formation, and packaging to obtain the above-mentioned lithium-ion battery.

In this application, setting the first protective layer and the second protective layer can play a role of physical isolation when the battery is mechanically damaged, so that the current collectors in the electrode sheet assembly 1 and the protection assembly 2 are not easily exposed, and the current collector inside the laminated battery cell are prevented from contacting with the active layer or current collector of the adjacent electrode sheet, thereby reducing the possibility of short circuit and significantly improving the safety performance of the battery. At the same time, the conductive particles make the first protective layer and the second protective layer conductive, which can ensure smooth electronic conduction between the active layer and the current collector, so that the battery has excellent safety performance and good cycle performance.

Due to the inclusion of the above positive electrode sheet, the lithium-ion battery of the present application also has excellent safety performance and good cycle performance.

In order to make the purpose, technical solutions and advantages of the present application clearer, the technical solutions in the embodiments of the present application will be clearly and completely described below in combination with the embodiments of the present application. Obviously, the described embodiments are only part of the embodiments of the present application, not all of the embodiments. Based on the embodiments in this application, all other embodiments obtained by those skilled in the art without doing any creative work shall fall within the scope of protection of this application.

In the following, the positive electrode sheet and lithium-ion battery provided by the present application are illustrated in detail through specific examples and comparative examples, where the test method of electrode peeling force is as follows: cutting the positive electrode sheet into small pieces with a length of 240 mm and a width of 30 mm; cutting the NITTO No. 5000NS tape into small pieces according to the specification of a length of 200 mm and a width of 24 mm; sticking one side of the small piece of tape to a steel plate (260 mm * 50 mm), and sticking the small piece of positive electrode sheet to the other side of the small piece of tape, thereby ensuring that the small piece of positive electrode sheet completely covers the small piece of tape; using a hand-held roller (diameter of 95mm, width of 45mm, weight of 2kg) to roll back and forth for 3 times to stick the small piece of positive electrode sheet and the small piece of tape together, and then using a tensile machine (tensile machine model Dongguan Kejian KJ-1065 series) for testing (180-degree peeling), where the testing equipment automatically records the tensile force value that changes with the peeling displacement and draws a curve of the tensile force value changing with the peeling displacement, the horizontal axis being the peeling displacement and the vertical axis being the tensile force value. The tensile force value when the curve is flat and the peeling displacement is greater than 5mm is the peeling force.

Since the peeling force between the protective layer and the current collector is greater than the peeling force between the protective layer and the active material layer, when the positive electrode sheet is subjected to a peeling force test, peeling usually occurs at the interface between the active material and the protective layer. However, this test phenomenon also shows that the peeling force between the protective layer and the current collector is greater than the peeling force between the protective layer and the active material layer.

The resistivity of a protective layer is determined as follows: a positive electrode current collector is placed on a bulk resistance meter with a probe diameter of 15 mm, and the resistance of the positive electrode current collector is measured as R1, and then the positive electrode current collector with a positive electrode protective layer is placed on the bulk resistance meter, and the total resistance of the positive electrode protective layer and the positive electrode current collector is measured as R2, where the resistance of the positive electrode protective layer is expressed as: R=R2-R1.

The method for determining the resistivity of the conductive particle is as follows: the resistivity of the conductive particle is tested using a powder resistance tester, the test pressure of the powder being set to 20KN.

The method for determining an average particle size of the conductive particle is as follows: using a laser particle size tester to test a particle size distribution of the conductive particle, and calculating the particle size from small to large, where the particle size when the sum of the volumes of the particles accounts for 50% of the total volume of the particles is referred to as the average particle size.

Example 1

The preparation of the laminated battery cell and the lithium-ion battery of this embodiment include the following steps.

1. Preparation of a positive electrode sheet

1) 95wt% ATO-coated $TiO_2$ as a conductive particle (ATO accounts for 10% of the conductive particle) is mixed with 5wt% PVDF to give a mixture, and NMP is added and stirred to obtain a positive electrode protective layer slurry with a solid content of 40%.

2) 96wt% of lithium cobaltate, 1wt% of carbon black, 1wt% of carbon nanotubes, and 2wt% of PVDF are mixed to give a mixture, and NMP is added and stirred to obtain a positive electrode active layer slurry with a solid content of 70%, where the average particle size of ATO-coated TiO2 is 0.4$\mu$m.

3) The positive electrode protective layer slurry prepared in step 1) is coated on two functional surfaces of an aluminum foil (a thickness of 9 $\mu$m) and dried to obtain a first protective layer, and then the positive electrode active layer slurry prepared in step 2) is coated on the first protective layer to obtain a functional electrode sheet.

4) The positive electrode protective layer slurry prepared in step 1) is coated on two functional surfaces of an aluminum foil (a thickness of 9$\mu$m) and dried to obtain second protective layer, and then the positive electrode active layer slurry prepared in step 2) is coated on the second protective layer on one surface to obtain a protection assembly.

5) A roller press is used for rolling the functional electrode sheet and the protection assembly, so that the single-sided thickness of the first protective layer on the functional electrode sheet is rolled to 3$\mu$m, the single-sided thickness of the second protective layer on the protection assembly is rolled to 3$\mu$m, and the single-sided thickness of the active layer is rolled to 45$\mu$m; and then the functional electrode sheet and the protection assembly are cut by using a slitting machine, and finally a positive tab 104 is welded on the functional electrode sheet and the protection assembly and a protective tape is stuck.

2. Preparation of a negative electrode sheet

96wt% of artificial graphite, 1wt% of carbon black, 1.5wt% of styrene-butadiene rubber, and 1.5wt% of sodium carboxymethyl cellulose are mixed to give a mixture, and deionized water is added and stirred to obtain a negative electrode active layer slurry with a solid content of 40%; and the negative electrode active layer slurry is coated on the upper and lower surfaces of a copper foil (a thickness of 5$\mu$m) by an extrusion coating process, and dried to obtain the negative electrode sheet;
the negative electrode sheet obtained is rolled using a roller press, and then cut using a slitting machine. Finally, a negative tab 105 is welded on the cut negative electrode sheet, and a protective tape is stuck.

3. Preparation of a laminated battery cell

The functional electrode sheet, a separator, and the negative electrode sheet are laminated in sequence to obtain an electrode sheet assembly, and then the protection assembly, the separator, the electrode sheet assembly, the separator, and the protection assembly are laminated in sequence, and stuck with an adhesive tape for fixation to obtain the laminated battery cell;
where, the positive electrode active layer on the protection assembly is close to the electrode sheet assembly.

4. Preparation of a lithium-ion battery

1) A punching die is used for punching out an aluminum-laminated film, then the laminated battery cell is encapsulated with the punched aluminum-laminated film to obtain a battery cell, and baked until the moisture content is qualified; and an electrolyte is injected into the battery cell.
2) Using a lithium-ion battery formation equipment, the obtained battery cell is subjected to charging and discharging so as to harden the battery cell, and then the capacity of the battery cell is sorted out.
3) The battery cell is sealed for a second time and subjected to edge-folded to obtain the lithium-ion battery of this embodiment.

Example 2

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m" in Example 1 is replaced by "the single-sided thickness of the first protective layer is rolled to 2$\mu$m, and the single-sided thickness of the second protective layer is rolled to 2 $\mu$m", and the other conditions remain unchanged;
in the preparation of the laminated battery cell, the functional electrode sheet and the protection assembly are replaced with the functional electrode sheet and the protection assembly prepared in this embodiment.

Example 3

Compared with Example 1, in the preparation of the positive electrode sheet, in step 5), "the single-sided thickness of the first protective layer is rolled to 3$\mu$m, and the single-sided thickness of the second protective layer is rolled to 3 $\mu$m" in Example 1 is replaced by "the single-sided thickness of the first protective layer is rolled to 1$\mu$m, and the single-sided thickness of the second protective layer is rolled to 1 $\mu$m", and the other conditions remain unchanged;
in the preparation of the laminated battery cell, the functional electrode sheet and the protection assembly are replaced with the functional electrode sheet and the protection assembly prepared in this embodiment.

Example 4

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m" in Example 1 is replaced by "the single-sided thickness of the first protective layer is rolled to 4$\mu$m, and the single-sided thickness of the second protective layer is rolled to 4 $\mu$m ", and the other conditions remain unchanged;
in the preparation of the laminated battery cell, the functional electrode sheet and the protection assembly are replaced with the functional electrode sheet and the protection assembly prepared in this embodiment.

Example 5

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m" in Example 1 is replaced by "the single-sided thickness of the first protective layer is rolled to 5 $\mu$m, and the single-sided thickness of the second protective layer is rolled to 5 $\mu$m ", and the other conditions remain unchanged;
in the preparation of the laminated battery cell, the functional electrode sheet and the protection assembly are replaced with the functional electrode sheet and the protection assembly prepared in this embodiment.

Example 6

Compared with Example 1, in the preparation of the positive electrode sheet, in step 5), "the single-sided thickness of the first protective layer is rolled to $3\mu$m, and the single-sided thickness of the second protective layer is rolled to 3 $\mu$m" in Example 1 is replaced by "the single-sided thickness of the first protective layer is rolled to $2\mu$m, and the single-sided thickness of the second protective layer is rolled to 3 $\mu$m", and the other conditions remain unchanged;
in the preparation of the laminated battery cell, the functional electrode sheet and the protection assembly are replaced with the functional electrode sheet and the protection assembly prepared in this embodiment.

Example 7

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m" in Example 1 is replaced by "the single-sided thickness of the first protective layer is rolled to $2\mu$m, and the single-sided thickness of the second protective layer is rolled to 5 $\mu$m ", and the other conditions remain unchanged;
in the preparation of the laminated battery cell, the functional electrode sheet and the protection assembly are replaced with the functional electrode sheet and the protection assembly prepared in this embodiment.

Example 8

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m " in Example 1 is replaced by "the single-sided thickness of the first protective layer is rolled to $2\mu$m, and the single-sided thickness of the second protective layer is rolled to 8 $\mu$m ", and the other conditions remain unchanged;
in the preparation of the laminated battery cell, the functional electrode sheet and the protection assembly are replaced with the functional electrode sheet and the protection assembly prepared in this embodiment.

Example 9

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m" in Example 1 is replaced by "the single-sided thickness of the first protective layer is rolled to 3 $\mu$m, and the single-sided thickness of the second protective layer is rolled to 1 $\mu$m", and the other conditions remain unchanged;
in the preparation of the laminated battery cell, the functional electrode sheet and the protection assembly are replaced with the functional electrode sheet and the protection assembly prepared in this embodiment.

Example 10

Compared with Example 1, in the preparation of the positive electrode sheet, in step 5), "the single-sided thickness of the second protective layer is rolled to 3 $\mu$m" in Example 1 is replaced by "the single-sided thickness of the second protective layer is rolled to $2\mu$m", and the other conditions remain unchanged;
in the preparation of the laminated battery cell, the functional electrode sheet and the protection assembly are replaced with the functional electrode sheet and the protection assembly prepared in this embodiment.

Example 11

Compared with Example 1, in the preparation of the positive electrode sheet, in step 5), "the single-sided thickness of the first protective layer is rolled to 3 $\mu$m, and the single-sided thickness of the second protective layer is rolled to 3 $\mu$m" in Example 1 is replaced by "the single-sided thickness of the first protective layer is rolled to $15\mu$m, and the single-sided thickness of the second protective layer is rolled to 15 $\mu$m", and the other conditions remain unchanged;
in the preparation of the laminated battery cell, the functional electrode sheet and the protection assembly are replaced with the functional electrode sheet and the protection assembly prepared in this embodiment.

Example 12

Compared with Example 1, in the preparation of the positive electrode sheet, in step 1), "95wt% ATO-coated $TiO_2$

as a conductive particle (ATO accounts for 10% of the conductive particle) is mixed with 5wt% PVDF to give a mixture" is replaced by "30wt% ATO-coated $TiO_2$ and 60% $TiO_2$ as a conductive particle (ATO accounts for 10% of the conductive particle) is mixed with 10wt% PVDF to give a mixture", and the other conditions remain unchanged;

in the preparation of the laminated battery cell, the functional electrode sheet and the protection assembly are replaced with the functional electrode sheet and the protection assembly prepared in this embodiment.

Comparative Example 1

Compared with Example 1, in the preparation of the positive electrode sheet, the step 4) is replaced by "the positive electrode active layer slurry prepared in step 2) is coated on an aluminum foil (a thickness of $9\mu m$) to obtain a protection assembly",

in step 5), the "the single-side thickness of the first protective layer is rolled to $3\mu m$, and the single-side thickness of the second protective layer is rolled to $3\mu m$" in Example 1 is replaced by "the single-side thickness of the first protective layer is rolled to $3\mu m$", and the other conditions remain unchanged;
in the preparation of the laminated battery cell, the functional electrode sheet and the protection assembly are replaced with the functional electrode sheet and the protection assembly prepared in this embodiment.

Comparative Example 2

Compared with Example 1, in the preparation of the positive electrode sheet, steps 3), 4), and 5) are replaced by "the positive electrode active layer slurry prepared in step 2) is coated on two functional surfaces of an aluminum foil (a thickness of $9\mu m$), and dried to obtain a positive electrode sheet; the positive electrode sheet obtained is rolled using a roller press until the single-side thickness of the active layer is $45\mu m$", and the other conditions remain unchanged;
in the preparation of the laminated battery cell, the functional electrode sheet and the protection assembly are replaced with the positive electrode sheet prepared in this embodiment.

Comparative Example 3

Compared with Example 1, in the preparation of the positive electrode sheet, in step 1), "ATO-coated $TiO_2$ as a conductive particle" in Example 1 is replaced with "ATO as a conductive particle", and the other conditions remain unchanged;
in the preparation of the laminated battery cell, the functional electrode sheet and the protection assembly are replaced with the functional electrode sheet and the protection assembly prepared in this embodiment.
The rest is the same as in Example 1.

Comparative Example 4

Compared with Example 1, in the preparation of the positive electrode sheet, in step 5), "the single-sided thickness of the first protective layer is rolled to $3\mu m$, and the single-sided thickness of the second protective layer is rolled to $3\mu m$" in Example 1 is replaced by "the single-sided thickness of the first protective layer is rolled to $0.5\mu m$, and the single-sided thickness of the second protective layer is rolled to $0.5\mu m$", and the other conditions remain unchanged;
in the preparation of the laminated battery cell, the functional electrode sheet and the protection assembly are replaced with the functional electrode sheet and the protection assembly prepared in this embodiment.

Comparative Example 5

Compared with Example 1, in the preparation of the positive electrode sheet, in step 1), "95wt% ATO-coated $TiO_2$ as a conductive particle (ATO accounts for 10% of the conductive particle) is mixed with 5wt% PVDF to give a mixture" is replaced by "95wt% ATO-coated $TiO_2$ as a conductive particle (ATO accounts for 60% of the conductive particle) is mixed with 5wt% PVDF to give a mixture", and the other conditions remain unchanged;
in the preparation of the laminated battery cell, the functional electrode sheet and the protection assembly are replaced with the functional electrode sheet and the protection assembly prepared in this embodiment.
The lithium-ion batteries of the above examples and comparative examples are tested for needle puncture qualification rate, screw extrusion qualification rate, capacity retention rate, and energy density. The test methods are as follows.

a. Needle puncture qualification rate

Test method: fully charging the lithium-ion battery, and then placing it on a test bench of the needle puncture test equipment; and piercing a battery from the middle part of the battery with a tungsten steel needle having a diameter of 3mm and a needle tip length of 3.62mm at a speed of 100mm/s, where the battery will be considered as test qualification if it does not catch fire or explode. The qualification number/test number is the needle puncture qualification rate, and the test number is 30.

b. Screw extrusion qualification rate

Test method: the lithium-ion battery is fully charged and then placed on the test bench of the extrusion equipment, an M2*4 screw (a screw diameter of 2mm, a screw length of 4mm) is placed in the middle of the battery, then the extrusion equipment is started to press the extrusion plate down at a speed of 100mm/s, and the test is stopped when the extrusion force reaches 13KN, where the battery is considered as test qualification if it does not catch fire or explode. The qualification number/test number is the screw test qualification rate, and the test number is 30.

c. Capacity retention rate

Test method: At 45 ° C, the lithium-ion battery is subjected to charging and discharging at a rate of 1.5C charge/0.5C discharge, and the discharge capacity Q2 of the 500th charge and discharge and the discharge capacity Q1 of the first charge and discharge are recorded. The capacity retention rate = Q2/Q1×100%.

d. Energy density

Test method: the lithium-ion battery is charged to an upper-limit voltage of 4.45V, and then is discharged at 0.2C to a lower-limit voltage of 3.0V, where the discharge energy is recorded as E, and then the energy density of the lithium-ion battery is calculated using the following formula:

$$\text{Energy density} = E/(\text{length} \times \text{width} \times \text{height of lithium-ion battery}).$$

The specific test results are shown in Table 1 and Table 2.

Table 1

| Item | First protective layer composition | Second protective layer composition | First protective layer thickness | Second protective layer thickness | Conductive particle coating layer ratio | First protective layer resistance mΩ | second protective layer resistance mΩ | Needle puncture qualification rate | Screw qualification rate | 45°C cycle capacity retention rate | Energy density (Wh/L) |
|---|---|---|---|---|---|---|---|---|---|---|---|
| Example 1 | 95% ATO coated $TiO_2$ +5% PVDF | 95% ATO coated $TiO_2$ +5% PVDF | 3 | 3 | 10% | 200 | 200 | 30/30 | 30/30 | 85.7% | 690 |
| Exam ple 2 | 95% ATO coated $TiO_2$ +5% PVDF | 95% ATO coated $TiO_2$ +5% PVDF | 2 | 2 | 10% | 130 | 130 | 26/30 | 26/30 | 85.9% | 692 |
| Exam ple 3 | 95% ATO coated $TiO_2$ +5% PVDF | 95% ATO coated $TiO_2$ +5% PVDF | 1 | 1 | 10% | 60 | 60 | 23/30 | 22/30 | 86% | 695 |
| Example 4 | 95% ATO coated $TiO_2$ +5% PVDF | 95% ATO coated $TiO_2$ +5% PVDF | 4 | 4 | 10% | 280 | 280 | 30/30 | 30/30 | 85.6% | 688 |
| Example 5 | 95% ATO coated $TiO_2$ +5% PVDF | 95% ATO coated $TiO_2$ +5% PVDF | 5 | 5 | 10% | 310 | 310 | 30/30 | 30/30 | 85.4% | 685 |
| Example 6 | 95% ATO coated $TiO_2$ +5% PVDF | 95% ATO coated $TiO_2$ +5% PVDF | 2 | 3 | 10% | 130 | 200 | 28/30 | 27/30 | 85.9% | 691 |
| Example 7 | 95% ATO coated $TiO_2$ +5% PVDF | 95% ATO coated $TiO_2$ +5% PVDF | 2 | 5 | 10% | 130 | 310 | 30/30 | 20/30 | 85.9% | 691 |
| Example 8 | 95% ATO coated $TiO_2$ +5% PVDF | 95% ATO coated $TiO_2$ +5% PVDF | 2 | 8 | 10% | 130 | 500 | 30/30 | 30/30 | 85.9% | 690 |
| Example 9 | 95% ATO coated $TiO_2$ +5% PVDF | 95% ATO coated $TiO_2$ +5% PVDF | 3 | 1 | 10% | 200 | 60 | 25/30 | 24/30 | 85.7% | 690 |

Table 2

| Item | First protective layer composition | Second protective layer composition | First protective layer thickness | Second protective layer thickness | Conductive particle coating layer ratio | First protective layer resistance mΩ | second protective layer resistance mΩ | Needle puncture qualification rate | Screw qualification rate | 45°C cycle capacity retention rate | Energy density (Wh/L) |
|---|---|---|---|---|---|---|---|---|---|---|---|
| Example 10 | 95% ATO coated $TiO_2$ +5% PVDF | 95% ATO coated $TiO_2$ +5% PVDF | 3 | 2 | 10% | 200 | 130 | 27/30 | 26/30 | 85.7% | 691 |
| Example 11 | 95% ATO coated $TiO_2$ +5% PVDF | 95% ATO coated $TiO_2$ +5% PVDF | 15 | 15 | 10% | 1000 | 1000 | 30/30 | 30/30 | 84.2% | 655 |
| Exam ple 12 | 30% ATO coated $TiO_2$ +60% $TiO_2$ +10% PVDF | 30%ATO coated TiO2+60% TiO2+10% PVDF | 3 | 3 | 10% | 3000 | 3000 | 30/30 | 30/30 | 67% | 690 |
| Comp arative Exam ple 1 | 95% ATO coated $TiO_2$ +5% PVDF | / | 3 | 0 | 10% | 200 | 0 | 18/30 | 17/30 | 85.7% | 691 |
| Comp arative Exam ple 2 | / | / | 0 | 0 | | | | 0/30 | 0/30 | 84% | 700 |
| Comp arative Exam ple 3 | 95% ATO+5% PVDF | 95% ATO+5% PVDF | 3 | 3 | / | 8 | 8 | 6/30 | 5/30 | 86.9% | 690 |
| Comp arative Exam ple 4 | 95% ATO coated $TiO_2$ +5% PVDF | 95% ATO coated $TiO_2$ +5% PVDF | 0.5 | 0.5 | 10% | 30 | 30 | 12/30 | 13/30 | 86.2% | 698 |

(continued)

| Item | First protective layer composition | Second protective layer composition | First protective layer thickness | Second protective layer thickness | Conductive particle coating layer ratio | First protective layer resistance mΩ | second protective layer resistance mΩ | Needle puncture qualification rate | Screw qualification rate | 45°C cycle capacity retention rate | Energy density (Wh/L) |
|---|---|---|---|---|---|---|---|---|---|---|---|
| Comp arative Exam ple 5 | 95% ATO coated TiO$_2$ +5% PVDF | 95% ATO coated TiO$_2$ +5% PVDF | 3 | 3 | 60% | 20 | 20 | 16/30 | 15/30 | 86.6% | 690 |

According to Table 1 and Table 2, by comparing Examples 1 to 12 with Comparative Examples 1 and 2, it can be seen that adding the first protective layer and the second protective layer can significantly improve the safety performance of the battery.

By comparing Example 1 with Examples 9 and 10, it can be seen that when the thickness of the second protective layer is smaller than that of the first protective layer, the safety of the battery will be reduced. When the thickness of the first protective layer remains unchanged, as the thickness of the second protective layer increases, the safety performance of the battery is also significantly improved. By comparing Example 2 with Examples 6, 7, and 8, it can be seen that when the thickness of the second protective layer is greater than or equal to the thickness of the first protective layer, the safety of the battery is improved. When the thickness of the first protective layer remains unchanged, as the thickness of the second protective layer increases, the safety performance of the battery is also significantly improved.

By comparing Example 1 and Comparative Example 3, it can be seen that the use of an inorganic filler having a conductive coating layer as a conductive material can further reduce the probability of short circuit between the positive electrode current collector and the negative electrode active layer, improving the safety performance of the battery, and at the same time having good cycle performance of the battery.

By comparing Example 1 and Comparative Example 4, it can be seen that as the thickness of the protective layer increases, the safety performance of the lithium-ion battery can also be improved accordingly. When the thickness of the protective layer does not exceed $0.5\mu m$, it is difficult to achieve the protective effect.

By comparing Example 1 with Comparative Example 5, it can be seen that when the conductive coating layer accounts for 2% to 40% of the mass content of the conductive particle, the battery has relatively balanced safety performance and cycle performance.

Finally, it should be noted that the above embodiments are only used to illustrate the technical solutions of the present application, rather than to limit them. Although the present application has been described in detail with reference to the aforementioned embodiments, those skilled in the art should understand that they can still modify the technical solutions described in the aforementioned embodiments, or replace some or all of the technical features therein with equivalents. However, these modifications or replacements do not cause the essence of the corresponding technical solutions to deviate from the scope of the technical solutions of the embodiments of the present application, as defined by the appended claims.

**Claims**

1. A laminated battery cell, comprising an electrode sheet assembly (1) and a protection assembly (2), wherein the protection assembly (2) is located on a surface of an outer electrode sheet of the electrode sheet assembly (1);

   the electrode sheet assembly (1) comprises at least one functional electrode sheet (101), the functional electrode sheet (101) comprises a first current collector (1011), a first protective layer (1012) and a first active layer (1013), and the first protective layer (1012) is located between the first current collector (1011) and the first active layer (1013);
   the protection assembly (2) comprises a second current collector (2011) and a second protective layer (2012), and the second protective layer (2012) is away from the electrode sheet assembly (1);
   wherein
   the first protective layer (1012) comprises a conductive particle and a binder; the conductive particle is an inorganic filler with a conductive coating layer on its surface; the conductive coating layer accounts for 2% to 40% of a mass content of the conductive particle; and
   a thickness of the first protective layer (1012) is $1\mu m$ to $10\mu m$;
   **characterized in that**
   the second protective layer (2012) comprises a conductive particle and a binder; the conductive particle is an inorganic filler with a conductive coating layer on its surface; the conductive coating layer accounts for 2% to 40% of a mass content of the conductive particle; and
   a thickness of the second protective layer (2012) is $1\mu m$ to $10\mu m$.

2. The laminated battery cell according to claim 1, wherein at least a portion of the conductive coating layer constitutes an outermost layer of the conductive particle.

3. The laminated battery cell according to claim 1 or 2, wherein the conductive coating layer covers at least a portion of the inorganic filler.

4. The laminated battery cell according to any one of claims 1 to 3, wherein a thickness of the first protective layer (1012) is A, a thickness of the second protective layer (2012) is B, and A is less than or equal to B.

5. The laminated battery cell according to any one of claims 1 to 4, wherein the first protective layer (1012) and the second protective layer (2012) each independently comprise 40% to 98% of the conductive particle, 2% to 30% of the binder, and 0% to 40% of a non-conductive particle by mass content.

6. The laminated battery cell according to any one of claims 1 to 5, wherein the first protective layer (1012) and the second protective layer (2012) each independently have a resistance of 10-2000mΩ.

7. The laminated battery cell according to any one of claims 1 to 5, wherein a resistivity of the conductive particle is 1 to 100Ω•cm.

8. The laminated battery cell according to any one of claims 1 to 5, wherein an average particle size of the conductive particle is 0.05-5μm.

9. The laminated battery cell according to claim 1, wherein the conductive coating layer comprises at least one of tin oxide, indium oxide, ATO, FTO, ITO, and carbon material.

10. The laminated battery cell according to any one of claims 6 to 9, wherein the inorganic filler comprises at least one of aluminum oxide, magnesium oxide, titanium oxide, zinc oxide, silicon oxide, boehmite, cobalt oxide, iron phosphate, lithium iron phosphate, lithium nickel cobalt manganese oxide, and lithium iron manganese phosphate.

11. A lithium-ion battery, comprising the laminated battery cell according to any one of claims 1 to 10.

**Patentansprüche**

1. Laminierte Batteriezelle, aufweisend eine Elektrodenplattenanordnung (1) und eine Schutzanordnung (2), wobei die Schutzanordnung (2) auf einer Oberfläche einer äußeren Elektrodenplatte der Elektrodenplattenanordnung (1) angeordnet ist;

   wobei die Elektrodenplattenanordnung (1) mindestens eine funktionelle Elektrodenplatte (101) aufweist, wobei die funktionelle Elektrodenplatte (101) einen ersten Stromkollektor (1011), eine erste Schutzschicht (1012) und eine erste aktive Schicht (1013) aufweist, und die erste Schutzschicht (1012) zwischen dem ersten Stromkollektor (1011) und der ersten aktiven Schicht (1013) angeordnet ist;
   wobei die Schutzanordnung (2) einen zweiten Stromkollektor (2011) und eine zweite Schutzschicht (2012) aufweist, und die zweite Schutzschicht (2012) von der Elektrodenplattenanordnung (1) entfernt ist;
   wobei die erste Schutzschicht (1012) ein leitfähiges Partikel und ein Bindemittel aufweist;
   das leitfähige Partikel aus einem anorganischen Füllstoff mit einer leitfähigen Überzugsschicht auf seiner Oberfläche besteht;
   die leitfähige Überzugsschicht 2 % bis 40 % eines Massegehalts des leitfähigen Partikels ausmacht; und
   eine Dicke der ersten Schutzschicht (1012) 1 μm bis 10 μm beträgt;
   **dadurch gekennzeichnet, dass**
   die zweite Schutzschicht (2012) ein leitfähiges Partikel und ein Bindemittel aufweist;
   das leitfähige Partikel aus einem anorganischen Füllstoff mit einer leitfähigen Überzugsschicht auf seiner Oberfläche besteht;
   die leitfähige Überzugsschicht 2 % bis 40 % eines Massengehalts des leitfähigen Partikels ausmacht; und
   eine Dicke der zweiten Schutzschicht (2012) 1 μm bis 10 μm beträgt.

2. Laminierte Batteriezelle nach Anspruch 1, wobei mindestens ein Teil der leitfähigen Überzugsschicht eine äußerste Schicht des leitfähigen Partikels bildet.

3. Laminierte Batteriezelle nach Anspruch 1 oder 2, wobei die leitfähige Überzugsschicht mindestens einen Teil des anorganischen Füllstoffs bedeckt.

4. Laminierte Batteriezelle nach einem der Ansprüche 1 bis 3, wobei eine Dicke der ersten Schutzschicht (1012) A ist, eine Dicke der zweiten Schutzschicht (2012) B ist und A kleiner als oder gleich B ist.

**5.** Laminierte Batteriezelle nach einem der Ansprüche 1 bis 4, wobei die erste Schutzschicht (1012) und die zweite Schutzschicht (2012) jeweils unabhängig voneinander 40 % bis 98 % des leitfähigen Partikels, 2 % bis 30 % des Bindemittels und 0 % bis 40 % eines nichtleitfähigen Partikels, bezogen auf den Massegehalt, aufweisen.

**6.** Die laminierte Batteriezelle nach einem der Ansprüche 1 bis 5, wobei die erste Schutzschicht (1012) und die zweite Schutzschicht (2012) jeweils unabhängig voneinander einen Widerstand von 10-2000 mΩ aufweisen.

**7.** Laminierte Batteriezelle nach einem der Ansprüche 1 bis 5, wobei der spezifische Widerstand des leitfähigen Partikels 1 bis 100 Ω·cm beträgt.

**8.** Laminierte Batteriezelle nach einem der Ansprüche 1 bis 5, wobei die durchschnittliche Partikelgröße des leitfähigen Partikels 0,05-5 μm beträgt.

**9.** Laminierte Batteriezelle nach Anspruch 1, wobei die leitfähige Überzugsschicht mindestens eines von Zinnoxid, Indiumoxid, ATO, FTO, ITO und Kohlenstoffmaterial aufweist.

**10.** Laminierte Batteriezelle nach einem der Ansprüche 6 bis 9, wobei der anorganische Füllstoff mindestens eines aufweist von: Aluminiumoxid, Magnesiumoxid, Titanoxid, Zinkoxid, Siliziumoxid, Böhmit, Kobaltoxid, Eisenphosphat, Lithiumeisenphosphat, Lithium-Nickel-Kobalt-Manganoxid und Lithiumeisenmanganphosphat.

**11.** Lithium-Ionen-Batterie, umfassend die laminierte Batteriezelle nach einem der Ansprüche 1 bis 10 aufweist.

**Revendications**

**1.** Cellule de batterie stratifiée, comprenant un assemblage de feuilles d'électrode (1) et un assemblage de protection (2), dans laquelle l'assemblage de protection (2) est situé sur une surface d'une feuille d'électrode supérieure de l'assemblage de feuilles d'électrode (1) ;

l'assemblage de feuilles d'électrode (1) comprend au moins une feuille d'électrode fonctionnelle (101), la feuille d'électrode fonctionnelle (101) comprend un premier collecteur de courant (1011), une première couche protectrice (1012), et une première couche active (1013), et la première couche protectrice (1012) est située entre le premier collecteur de courant (1011) et la première couche active (1013) ;
l'assemblage de protection (2) comprend un deuxième collecteur de courant (2011) et une deuxième couche protectrice (2012), et la deuxième couche protectrice (2012) est à distance de l'assemblage de feuilles d'électrode (1) ;
dans laquelle
la première couche protectrice (1012) comprend une particule conductrice et un liant ; la particule conductrice est une charge inorganique ayant une couche de revêtement conductrice sur sa surface ; la couche de revêtement conductrice représente 2 % à 40 % de la teneur en masse de la particule conductrice ; et
une épaisseur de la première couche protectrice (1012) est de 1 μm à 10 μm ;
**caractérisée en ce que**
la deuxième couche protectrice (2012) comprend une particule conductrice et un liant ; la particule conductrice est une charge inorganique ayant une couche de revêtement conductrice sur sa surface ; la couche de revêtement conductrice représente 2 % à 40 % de la teneur en masse de la particule conductrice ; et
une épaisseur de la deuxième couche protectrice (2012) est de 1 μm à 10 μm.

**2.** Cellule de batterie stratifiée selon la revendication 1, dans laquelle au moins une partie de la couche de revêtement conductrice constitue la couche la plus extérieure de la particule conductrice.

**3.** Cellule de batterie stratifiée selon la revendication 1 ou 2, dans laquelle la couche de revêtement conductrice couvre au moins une partie de la charge inorganique.

**4.** Cellule de batterie stratifiée selon l'une quelconque des revendications 1 à 3, dans laquelle une épaisseur de la première couche protectrice (1012) est A, une épaisseur de la deuxième couche protectrice (1012) est B, et A est inférieure ou égale à B.

**5.** Cellule de batterie stratifiée selon l'une quelconque des revendications 1 à 4, dans laquelle la première couche protectrice (1012) et la deuxième couche protectrice (2012) comprennent chacune indépendamment 40 % à 98 % de la particule conductrice, 2 % à 30 % du liant, et 0 % à 40 % d'une particule non conductrice, en proportions en masse.

6. Cellule de batterie stratifiée selon l'une quelconque des revendications 1 à 5, dans laquelle la première couche protectrice (1012) et la deuxième couche protectrice (2012) ont chacune indépendamment une résistance de 10 à 2 000 mΩ.

7. Cellule de batterie stratifiée selon l'une quelconque des revendications 1 à 5, dans laquelle la résistivité de la particule conductrice est de 1 à 100 Ω·cm.

8. Cellule de batterie stratifiée selon l'une quelconque des revendications 1 à 5, dans laquelle la granulométrie moyenne de la particule conductrice est de 0,05 à 5 μm.

9. Cellule de batterie stratifiée selon la revendication 1, dans laquelle la couche de revêtement conductrice comprend au moins l'un parmi l'oxyde d'étain, l'oxyde d'indium, l'ATO, le FTO, l'ITO, et un matériau en carbone.

10. Cellule de batterie stratifiée selon l'une quelconque des revendications 6 à 9, dans laquelle la charge inorganique comprend au moins l'un parmi l'oxyde d'aluminium, l'oxyde de magnésium, l'oxyde de titane, l'oxyde de zinc, l'oxyde de silicium, la boehmite, l'oxyde de cobalt, le phosphate de fer, le phosphate de lithium et fer, l'oxyde de lithium, nickel, cobalt et manganèse, et le phosphate de lithium, fer et manganèse.

11. Batterie lithium-ion comprenant la cellule de batterie stratifiée selon l'une quelconque des revendications 1 à 10.

FIG. 1

FIG. 2

1013
1012
1011

FIG. 3

2013
2012
2011
2012

FIG. 4

2011
2012

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005100782 A
- CN 114156429 A